Europäisches Patentamt

European Patent Office

Office européen des brevets

(11) Numéro de publication: **0 492 676 A1**

# DEMANDE DE BREVET EUROPEEN

(21) Numéro de dépôt: **91201834.8**

(22) Date de dépôt: **12.07.91**

(51) Int. Cl.⁵: **A01J 27/04**, A23C 19/09, A23P 1/08

(30) Priorité: **24.12.90 IT 6805690**

(43) Date de publication de la demande:
**01.07.92 Bulletin 92/27**

(84) Etats contractants désignés:
**AT BE CH DE DK ES FR GB IT LI LU NL SE**

(71) Demandeur: **FATTORIE OSELLA S.p.A.**
**Vicolo S. Abbondio 6**
**I-12030 Caramagna Piemonte(IT)**

(72) Inventeur: **Osella, Dario**
**Vicolo S. Abbondio 2**
**I-12030 Caramagna Piemonte(IT)**

(74) Mandataire: **Patrito, Pier Franco, Dr. Ing.**
**Cabinet PATRITO BREVETTI Via Don Minzoni**
**14**
**I-10121 Torino(IT)**

(54) **Procédé et dispositif pour la production de fromages fourrés, et produits qui en résultent.**

(57) Un procédé pour la production de fromages fourrés, comprenant les opérations de: remplir par des grains de caillebotte (C) une forme perméable (1) correspondante dans sa partie inférieure à la conformation extérieure désirée pour le produit final, et dans laquelle est disposé au moins un organe creux (3) correspondant à la conformation de la partie de la masse du fromage (F) qu'on veut remplacer par une farce (R); laisser la caillebotte (C) dans la forme jusqu'à ce qu'elle s'est déshydratée, en perdant le petit-lait contenu, en mesure telle que le fromage a pris une consistance adéquate; introduire dans l'organe creux (3) la farce (R) qu'on désire insérer dans le fromage; tirer de la masse de fromage (F) l'organe creux (3) de sorte que la farce (R) demeure dans la cavité ainsi laissée libre dans le fromage; et enfin extraire le fromage de la forme perméable (1). Ce procédé peut être réalisé manuellement ou bien il peut être mécanisé. Constituent également objets de l'invention le dispositif ayant la structure correspondante à ce qu'on a dit pour le procédé, et le fromage fourré résultant de la mise-en-oeuvre de ce procédé.

FIG.5    FIG.6    FIG.7    FIG.8

EP 0 492 676 A1

La présente invention a pour objet un procédé pour la production de fromages fourrés, et un dispositif pour la mise-en-oeuvre de ce procédé. Par la dénomination de fromage fourré on désigne, dans la présente description, un fromage de tout genre comportant une partie de sa propre masse remplacée par une masse de farce, différente du fromage de base mais qui, à son tour, peut être de tout genre, come par exemple un autre type de fromage, une pâte, une crème ou confiture alimentaire ou bien un mélange de ces ingrédients. Le fromage fourré résultant de ce procédé montre une structure particulière, et il constitue à son tour un objet de l'invention.

Des fromages fourrés sont connus, et ils sont produits en général en préparant des tranches de fromage et les superposant, alternées par des couches de farce. Toutefois une telle méthode n'est pas appropriée pour une réalisation industrielle, et de plus elle donne lieu à des produits finals dont les caractéristiques et la qualité ne sont pas suffisamment uniformes.

La présente invention a le but de proposer un procédé permettant de réaliser, d'une façon industriellement appropriée et que l'on peut reproduire, des fromages fourrés de tout genre; ainsi qu'un dispositif permettant par des moyens simples et d'emploi facile la mise-en-oeuvre industrielle, manuelle ou bien mécanisée, de ce procédé.

Le procédé suivant l'invention, pour la production de fromages, comportant les opérations de remplir par der grains de caillebotte une forme perméable correspondante dans sa partie inférieure à la conformation extérieure désirée pour le produit final, de laisser la caillebotte dans la forme jusqu'à ce qu'elle s'est déshydratée, en perdant le petit-lait contenu, en mesure telle que le fromage a pris une consistance adéquate, et enfin d'extraire le fromage de la forme, est caractérisé en ce que ledit remplissage est effectué en une forme perméable dans laquelle est disposé au moins un organe creux correspondant à la conformation d'une partie de la masse du fromage qu'on veut remplacer par une farce; et que le procédé comprend les opérations d'introduire dans l'organe creux la farce qu'on désire insérer dans le fromage et ensuite de tirer de la masse de fromage l'organe creux de sorte que la farce demeure dans la cavité ainsi laissée libre dans le fromage, ainsi produisant un fromage fourré.

Suivant un mode de réalisation plus perfectionné, le procédé suivant l'invention prévoit l'emploi d'un organe creux ayant une section perméable dont la perméabilité peut être supprimée par un organe obturateur, et il comprend aussi les opérations d'introduire une certaine quantité de grains de caillebotte au dessus de la farce déjà introduite dans ledit organe creux, et de rendre possible la déshydratation partielle de ladite quantité de grains de caillebotte à travers la section perméable dudit organe creux, en tirant ledit organe obturateur; de sorte qu'on produit aussi un élément de fromage qui recouvre et renferme la farce.

Bien entendu, le fromage ainsi produit peut être acheminé directement à la vente, ou bien il peut être soumis à tout autre traitement ultérieur, suivant les exigences de chaque qualité de fromage.

Le dispositif suivant l'invention, pour la mise-en-oeuvre du procédé décrit, comprenant une forme perméable correspondante dans sa partie inférieure à la conformation extérieure désirée pour le produit final, est caractérisé en ce qu'il comprend en outre au moins un organe creux correspondant à la conformation d'une partie de la masse du fromage qu'on veut remplacer par une farce, et des moyens pour retenir ledit organe creux en position correcte dans ladite forme perméable.

De préférence le dispositif comprend en outre un moyen pour assurer la permanence de la farce dans la cavité de la masse de fromage lors de l'extraction de l'organe creux de cette masse.

Dans un des modes de réalisation les plus simples possibles, le dispositif suivant l'invention comporte une forme perméable d'une conformation substantiellement cylindrique, un organe creux lui-aussi d'une conformation substantiellement cylindrique, comportant près de son extrémité supérieure des moyens susceptibles d'appuyer sur la forme perméable, et de préférence un piston dont la section correspond à la section intérieure dudit organe creux, susceptible d'être introduit dans cet organe au moins lors de l'extraction dudit organe creux de la pâte de fromage.

Dans un mode de réalisation plus perfectionné, ledit organe creux du dispositif suivant l'invention comporte une section perméable, et il est prévu un organe obturateur permettant de supprimer temporairement l'effet de la perméabilité de ladite section de l'organe creux.

Bien entendu, le dispositif suivant l'invention peut être simple, pour des faibles productions, ou bien il peut être multiple pour des productions plus importantes, mais en tous cas il permet de réaliser une production uniforme d'un type industriel.

Ces caractéristiques et d'autres, et les avantages de l'objet de l'invention, ressortiront plus clairement de la suivante description de certaines exemples de réalisation, toutefois non limitatifs, représentés schématiquement dans les dessins annexés, dans lesquels:

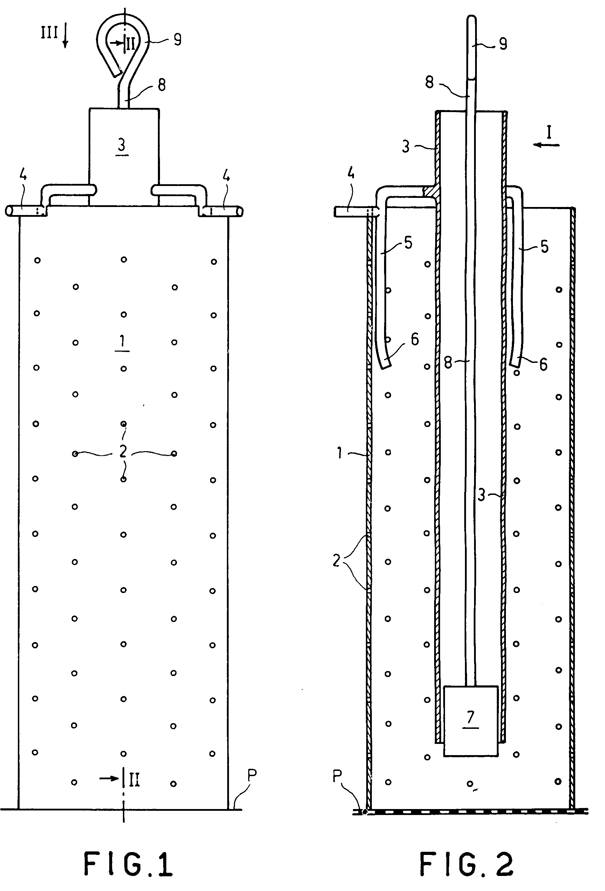

Fig. 1 est une vue en élévation frontale d'un dispositif suivant l'invention pour la production de fromages fourrés;

Fig. 2 en est une vue latérale, partiellement sectionnée suivant la ligne II-II de la figure 1;

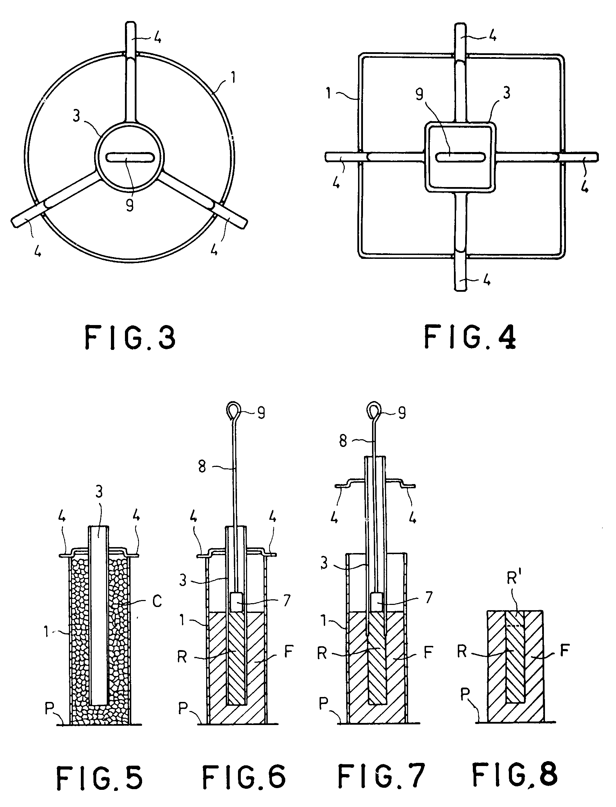

Fig. 3 en est une vue en plan;

Fig. 4 montre, dans une vue en plan similaire de la figure 3, un autre mode de réalisation;

Figs. 5 à 8 montrent schématiquement certaines phases du procédé suivant l'invention et la structure du produit qui en résulte; et

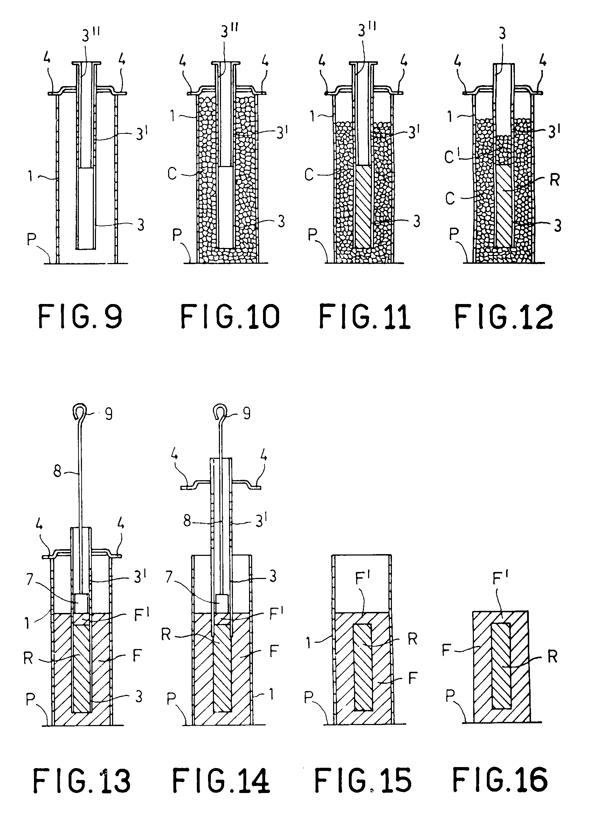

Figs. 9 à 16 montrent schématiquement certaines phases du procédé suivant l'invention, dans un mode de réalisation plus perfectionné, ainsi que la structure du produit qui en résulte.

On va décrire d'abord un mode de réalisation simple du dispositif, parce que la connaissance de sa structure facilite la compréhension du procédé proposé par l'invention.

Dans le mode de réalisation représenté dans les figures 1 à 3, le dispositif suivant l'invention comporte une forme perméable 1, laquelle dans ce cas est constituée par un tronçon de tube cylindrique de section uniforme, par exemple en matière plastique, dont les parois sont traversées par nombre de trous 2. La forme perméable 1 est destinée è être déposée sur un plan P, lui aussi perméable, par exemple constitué per un grillage ou par une tôle métallique perforée. Les éléments décrits jusqu'ici sont en soi bien connus dans la technique fromagère, et ils sont habituellement employés pour réaliser la déshydratation d'une masse de grains de caillebotte, introduite dans la forme perméable, laquelle par force de gravité perd graduellement le petit-lait contenu, qui sort par les trous de la forme perméable 1 et du plan P, réduisant ses dimensions et devenant plus compacte, jusqu'à atteindre le degré de consistance désiré. Après cela le fromage peut être extrait de la forme perméable et acheminé à la vente ou bien à des traitements ultérieurs. Le fromage extrait présente la conformation extérieure de la partie inférieure de la forme perméable 1.

Suivant l'invention, le dispositif comprend encore un organe creux 3, lequel dans ce cas est constitué par un tronçon de tube de section plus petite que la section de la forme perméable 1, correspondante à la section de la cavité qu'on désire réaliser dans la masse du fromage pour la remplir par une farce. Dans le cas représenté, le tube 3 n'arrive pas jusqu'à la base de la forme 1, mais en d'autres modes de réalisation le tube 3 pourrait aussi s'étendre jusqu'à la base de la forme 1.

Dans la partie supérieure du dispositif est disposé un moyen de positionnement pour retenir en sa position correcte le tube 3 dans la forme perméable 1. Dans le mode de réalisation représenté ce moyen de positionnement comporte des bras radiaux 4 disposés pour appuyer sur le bord supérieur de la forme perméable 1, laquelle, à cet effet, est pourvue de préférence d'encoches correspondantes, ainsi que des bras longitudinaux 5 de centrage, conformés pour se disposer à une distance réduite à l'intérieur de la paroi de la forme perméable 1, et qui se terminent par des extrémités arrondies 6. Cette disposition rend très facile l'opération d'introduire le corps creux 3 en une position correcte dans la forme perméable 1, sans demander aucune attention ou habileté particulière, et donc aussi pendant l'execution d'une opération industrielle par du personnel non spécialisé. D'autre part, le cas échéant, l'introduction du corps creux 3 dans la forme 1 pourrait aussi être mécanisée sans difficultés.

Le dispositif comprend enfin un piston 7 susceptible d'être introduit avec un jeu limité dans l'organe creux 3. Le piston 7 est pourvu d'une tige 8, dont la longueur est supérieure à la longueur de l'organe creux 3, et d'une poignée 9, moyennant laquelle le piston 7 peut être manoeuvré d'une façon appropriée.

Suivant la conformation extérieure qu'on désire obtenir pour le fromage, la section de la forme perméable 1 peut être, par exemple, circulaire, comme la montre la figure 3, ou bien carrée, comme la montre la figure 4, ou encore une autre quelconque. Du reste il n'est pas nécessaire que la forme perméable 1 ait une section constante; elle peut avoir toute conformation, pourvu que celle-ci autorise l'extraction du fromage. D'une façon similaire, suivant la conformation qu'on désire obtenir pour la cavité dans la masse de fromage, qui sera remplie par la farce, la section de l'organe creux 3 peut être par exemple circulaire, comme la montre la figure 3, ou bien carrée, comme la montre la figure 4, ou encore une autre quelconque, non nécessairement correspondante à la conformation de la forme perméable 1.

Le dispositif décrit est employé comme suit, pour mettre en oeuvre le procédé suivant l'invention.

Faisant référence à la figure 5, la forme perméable 1 est déposée sur un plan perméable P et l'organe creux 3 est inséré dans la forme perméable 1 dans la position établie par le moyen de positionnement 4, lequel est représenté ici en forme simplifiée. La cavité de la forme perméable 1 est remplie par des grains de caillebotte C. Si l'organe creux 3 n'arrive pas jusqu'à la base de la forme 1, la région sousjacente est occupée elle-aussi par des grains de caillebotte, lequels d'autre part n'ont pas une fluidité suffisante pour monter dans l'organe creux 3. L'ensemble ainsi préparé est laissé pour un temps suffisant, afin que le petit-lait contenu dans la caillebotte C sorte en traversant la forme perméable 1 et le plan perméable P, de manière que la masse de grains de caillebotte C devienne compacte et forme une pâte de fromage F (figure 6), laquelle, ayant réduit considérablement ses propres dimensions du fait de sa compactation et de sa déshydratation partielle, va occuper seulement la partie inférieure de la forme perméable 1.

Lorsque la pâte de fromage F, dans le cours de sa déshidratation, a atteint une consistance appropriée, une farce R est introduite dans l'organe creux 3 (figure 6). Cette opération peut être faite manuellement, le cas échéant à l'aide du piston 7, ou bien elle peut être mécanisée par l'emploi d'un bec de distribution et de dosage. Le remplissage par la farce R peut être fait, comme dans l'exemple représenté, jusqu'au même niveau auquel arrive la pâte de fromage F, ou bien jusqu'à un niveau inférieur. Cela fait, le piston 7 est disposé sur la farce R.

A' ce point l'organe creux 3 peut être soulevé, toujours tenant le piston 7 appuyé sur la farce R (figure 7). La présence du piston 7 oblige la farce R à rester dans la cavité formée par l'organe creux 3 dans la pâte de fromage F, pendant l'extraction de l'organe creux 3, et cela même si la farce n'a pas une fluidité suffisante pour abandonner spontanément l'organe creux 3 pendant son soulèvement.

Ensuite, la forme perméable 1 peut être soulevée aussi, en laissant sur le plan P une forme de fromage F contenant la farce R (figure 8). Le fromage fourré ainsi obtenu peut être acheminé à la vente, ou bien il peut être soumis à tout traitement ultérieur, par exemple d'essuyage, de salage, de mûrissement, d'emballage et ainsi de suite.

Si la farce R a été introduite jusqu'au même niveau de la pâte de fromage F, on obtient une forme suivant la figure 8, dans laquelle la farce est visible à la surface supérieure du fromage fourré. Toutefois il est possible d'introduire la farce R jusqu'à un niveau inférieur de celui de la pâte de fromage, et dans ce cas la portion supérieure R' de la farce peut être remplacée par de la pâte de fromage, si l'on ne désire pas que la farce soit visible supérieurement.

Afin d'obtenir systématiquement ce dernier effet, le procédé et le dispositif peuvent être ultérieurement perfectionnés comme le montrent les figures 9 à 16. Dans ce cas l'organe creux 3 du dispositif comporte une section 3' perméable, par exemple perforée, dans la région qui, lors que l'organe creux 3 est inséré dans la forme perméable 1, se trouve à un niveau supérieur du niveau qui doit être atteint par la farce. De plus, il est prévu un organe obturateur 3'' qui peut coopérer avec ladite section perméable 3' pour en supprimer la perméabilité; cet organe obturateur peut être sous forme d'un tube que l'on peut insérer dans l'organe creux 3 de sorte à couvrir la section perméable 3', comme le montre la figure 9. En tirant cet organe obturateur on peut restaurer la perméabilité de la section 3'. Par ce dispositif, le procédé se développe comme suit:

Le dispositif est préparé comme le montre la figure 9, avec la forme perméable 1 appuyée sur le plan perméable P et l'organe creux 3 (pourvu dans ce cas d'une section perméable 3') inséré dans la forme perméable 1 comme décrit auparavant; l'organe obturateur 3'' peut être déjà inséré dans l'organe creux 3, ou bien il pourrait être inséré ensuite. La forme perméable 1 est remplie par des grains de caillebotte, suivant la figure 10, et la caillebotte est laissée pour un certain temps pendant lequel elle perd une partie du petit-lait, devient plus compacte et réduit son propre niveau. A' ce point, comme le montre la figure 11, la farce R est introduite dans l'organe creux 3 jusqu'au niveau préétabli. Pendant cette opération l'organe obturateur 3'' empêche la farce de s'échapper en partie à travers la section perméable 3' de l'organe creux 3. L'organe obturateur 3'' peut être ensuite retiré et, comme le montre la figure 12, une certaine quantité de grains de caillebotte C' est introduite dans l'organe creux 3 sur la farce R. A' cette quantité de caillebotte C' on permet de perdre son petit-lait à travers la section perméable 3' de l'organe creux 3, à travers la masse principale de caillebotte C et la forme perméable 1. Continuant le procès de déshydratation, les parties de caillebotte C et C' prennent une consistance appropriée, se transformant dans le parties respectives F et F' de pâte de fromage, et alors, comme le montre la figure 13, le piston 7 est introduit dans l'organe creux 3 et appuyé sur son contenu, qu'il retient à sa place pendant que, comme le montre la figure 14, l'organe creux est retiré de la pâte de fromage. Après l'extraction de l'organe creux, les parties F et F' de pâte de fromage se soudent entr'elles, de sorte que la farce R résulte entièrement renfermée dans la masse du fromage, comme le montre la figure 15. Soulevée la forme perméable 1, le fromage ainsi préparé se présente, en section, comme le montre la figure 16. Il peut être acheminé à la vente ou bien à tout autre traitement prévu.

Le dispositif peut être disposé pour un fonctionnement mécanique et dans ce cas, bien entendu, les moyens de centrage 4 à 6 peuvent ne pas être nécessaires, et la poignée 9 de la tige du piston 7 est remplacée par la connexion à un organe d'actionnement.

Dans les cas où l'introduction de la farce R est effectuée par voie mécanique, l'organe obturateur 3'' peut être remplacé par le bec érogateur lui-même de la machine qui réalise cette opération, en donnant à ce bec une longueur suffisante pour s'introduire dans l'organe creux 3 jusqu'à en couvrir la section perméable 3'.

Comme on l'a dit, la farce peut consister en toute denrée alimentaire susceptible d'être associée avec avantage à un fromage, comme par exemple beurre ou crème de lait, un fromage de qualité différente, une pâte d'olives ou d'autres végétaux, une pâte d'anchois, une confiture, une sauce ou autre assaisonnement, incluant le cas échéant des petites denrées alimentaires ou des morceaux de denrées alimentaires, et ainsi de suite. On peut aussi effectuer le remplissage par des couches superposées de farces différentes.

Le fromage fourré qui résulte de la mise-en-oeuvre du procédé suivant l'invention montre une structure caractéristique, comportant une partie extérieure de pâte de fromage et au moins une région intérieure occupée par au moins une farce; il est distinct par rapport aux fromages fourrés connus, et il constitue à son tour un objet de la présente invention.

Dans une forme perméable 1 on peut insérer un corps creux 3 seulement, ou bien aussi deux ou plusieurs corps creux, destinés à recevoir des farces égales ou différentes.

Bien entendu, en donnant une conformation appropriée à la forme perméable 1 et au corps creux 3, et en proportionnant les quantités introduites de caillebotte C et de farce R, on peut obtenir des fromages fourrés ayant des formes, dimensions et proportions les plus différentes. Ces caractéristiques peuvent être ensuite régulièrement reproduites dans la production d'une façon uniforme.

Des modes de réalisation ont été décrites et représentées, mais bien entendu les parties décrites peuvent être remplacées par des équivalents techniques, et des différentes modifications peuvent être portés à ce qu'on a décrit et représenté.

**Revendications**

1. Procédé pour la production de fromages, comportant les opérations de remplir par des grains de caillebotte (C) une forme perméable (1) correspondante dans sa partie inférieure à la conformation extérieure désirée pour le produit final, de laisser la caillebotte dans la forme perméable jusqu'à ce qu'elle s'est déshydratée, en perdant le petit-lait contenu, en mesure telle que le fromage a pris une consistance adéquate, et enfin d'extraire le fromage de la forme perméable (1), caractérisé en ce que ledit remplissage est effectué en une forme perméable (1) dans laquelle est disposé au moins un organe creux (3) correspondant à la conformation d'une partie de la masse du fromage (F) qu'on veut remplacer par une farce (R); et que le procédé comprend les opérations d'introduire dans l'organe creux (3) la farce (R) qu'on désire insérer dans le fromage (F) et ensuite de tirer de la masse de fromage l'organe creux (3) de sorte que la farce demeure dans la cavité ainsi laissée libre dans le fromage (F), ainsi produisant un fromage fourré.

2. Procédé suivant la revendication 1, caractérisé en ce qu'il comprend aussi l'opération d'introduire dans ledit organe creux (3), au moins pendant son extraction de la masse (F) du fromage, un moyen (7) substantiellement en forme de piston, ayant la fonction de retenir la farce (R) dans la cavité formée par l'organe creux (3) dans la gâte de fromage (F).

3. Procédé suivant la revendication 1, caractérisé en ce qu'il prévoit l'emploi d'un organe creux (3) ayant une section perméable (3') dont la perméabilité peut être supprimée par un organe obturateur (3''), et il comprend aussi les opérations d'introduire une certaine quantité de grains de caillebotte (C') au dessus de la farce (R) déjà introduite dans ledit organe creux (3), et de rendre possible la déshydratation partielle de ladite quantité de grains de caillebotte (C') à travers la section perméable (3') dudit organe creux (3), en retirant ledit organe obturateur (3''); de sorte qu'on produit aussi un élément de fromage (F') qui recouvre et renferme la farce (R).

4. Dispositif pour la production de fromages, comprenant une forme perméable (1) correspondante dans sa partie inférieure à la conformation extérieure désirée pour le produit final, caractérisé en ce qu'il comprend en outre au moins un organe creux (3) correspondant à la conformation d'une partie de la masse du fromage (F) qu'on veut remplacer par une farce (R), et des moyens (4,5) pour retenir ledit organe creux (3) en position correcte dans ladite forme perméable (1).

5. Dispositif suivant la revendication 4, caractérisé en ce qu'il comprend en outre un moyen (7) pour assurer la permanence de la farce (R) dans la cavité de la masse de fromage (F) lors de l'extraction de l'organe creux (3) de cette masse.

6. Dispositif suivant la revendication 5, caractérisé en ce que ledit moyen pour assurer la permanence de la farce (R) dans la cavité de la masse de fromage (F) a substantiellement le caractère d'un piston (7) pourvu d'une tige (8) dont la longueur est supérieur à la longueur de l'organe creux (3), et qui se termine par un moyen de manoeuvre (9).

7. Dispositif suivant la revendication 4, caractérisé en ce que ladite forme perméable (1) a une forme substantiellement cylindrique, et ledit organe creux (3) a lui aussi une forme substantiellement cylindrique et est pourvu près de l'extrémité supérieure de moyens (4,5) de positionnement pour s'appuyer sur la forme perméable (1), lesdits moyens de positionnement comportant des bras radiaux (4) d'appui et des bras longitudinaux de centrage (5) se terminant par des extrémités arrondies.

8. Dispositif suivant la revendication 4, caractérisé en ce que ledit organe creux (3) comporte une section perméable (3'), et le dispositif comprend un organe obturateur (3'') permettant de supprimer temporairement l'effet de la perméabilité de ladite section (3') de l'organe creux (3).

9. Dispositif suivant la revendication 8, caractérisé en ce qu'il coopère avec des moyens pour l'introduction mécanique de la farce, et que ledit organe obturateur est constitué par un bec d'érogation de la machine effectuant l'introduction, réalisé avec une longueur suffisante pour s'introduire dans l'organe creux jusqu'à en couvrir la section perméable.

10. Fromage fourré, caractérisé par sa structure comportant une partie extérieure (F,F') composée par une pâte de fromage, et au moins une région intérieure (R) occupée par au moins une farce.

11. Fromage fourré suivant la revendication 10, caractérisé en ce que ladite région intérieure (R) occupée par su moins une farce est entièrement renfermée par de la pâte de fromage (F,F').

12. Procédé et dispositif pour la production de fromages fourrés, et produits qui en résultent, caractérisés par les particularités, dispositions, méthodes de travail et structures, telles qu'elles ressortent de la description ci-dessus et des dessins annexés, ou remplacées par leurs équivalents techniques.

FIG.1

FIG.2

FIG.3

FIG.4

FIG.5    FIG.6    FIG.7    FIG.8

FIG.9     FIG.10     FIG.11     FIG.12

FIG.13     FIG.14     FIG.15     FIG.16

Office européen
des brevets

RAPPORT DE RECHERCHE EUROPEENNE

Numero de la demande

EP    91 20 1834

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | GB-A-316 850 (E. GALBANI)<br>* page 1, ligne 45 - ligne 49; figures * <br>--- | 10,11 | A01J27/04<br>A23C19/09<br>A23P1/08 |
| Y | PATENT ABSTRACTS OF JAPAN<br>vol. 8, no. 85 (C-219)(1522) 18 Avril 1984 ( M. SAITOU ) 13 Janvier 1984<br>& JP-A-596 846<br>* abrégé *<br>--- | 1,2 | |
| Y | FR-A-1 310 623 (M. ALLES)<br>* page 2, ligne 24 - ligne 34; figures *<br>--- | 1,2 | |
| A | EP-A-0 169 919 (FRISCO-FINDUS AG)<br>--- | 4 | |
| A,P | FR-A-2 650 484 (FROMAGERIES BEL.)<br>--- | | |
| A | FR-A-1 333 833 (J. LINCET)<br><br>----- | | |

DOMAINES TECHNIQUES RECHERCHES (Int. Cl.5 )

A01J
A23C
A23P

Le présent rapport a été établi pour toutes les revendications

| Lieu de la recherche | Date d'achèvement de la recherche | Examinateur |
|---|---|---|
| LA HAYE | 03 AVRIL 1992 | MARANGONI G. |

EPO FORM 1503 03.82 (P0402)